# EUROPÄISCHE PATENTANMELDUNG

(11) **EP 3 330 906 A1**
(43) Veröffentlichungstag der Anmeldung: **06.06.2018**
(21) Anmeldenummer: 17001925.1
(22) Anmeldetag: 23.11.2017
(51) Int. Cl.: G06Q 10/06

(54) **VERFAHREN ZUM HERSTELLEN VON VERSCHIEDENEN KRAFTFAHRZEUGEN IN EINER FAHRZEUGFERTIGUNGSANLAGE, STEUERVORRICHTUNG FÜR EINE FAHRZEUGFERTIGUNGSANLAGE UND FAHRZEUGFERTIGUNGSANLAGE MIT EINER STEUERVORRICHTUNG**

(30) Priorität: 02.12.2016 DE 102016014370
(71) Anmelder: AUDI AG, 85045 Ingolstadt (DE)
(72) Erfinder: Marschall, Johannes, DE - 91171 Greding (DE)

(57) **Zusammenfassung**

Die Erfindung betrifft ein Verfahren zum Herstellen von verschiedenen Kraftfahrzeugen (60, 62) in einer Fahrzeugfertigungsanlage (10), wobei zunächst eine Soll-Produktionsreihenfolge (14) der Kraftfahrzeuge (60, 62) ermittelt wird. Können jeweilige Fahrzeugteile, welche zum Herstellen zumindest eines Teils der verschiedenen Kraftfahrzeuge (60, 62) benötigt werden, nicht zu einem, zur Fertigung in der Soll-Produktionsreihenfolge (14) erforderlichen Soll-Bereitstellungszeitpunkt bereitgestellt werden, so erfolgt ein Herstellen eines anderen Teils der Kraftfahrzeuge (60, 62) in einer von der Soll-Produktionsreihenfolge (14) verschiedenen Ist-Produktionsreihenfolge (50). Weitere Aspekte der Erfindung betreffen eine Steuervorrichtung (12) für eine Fahrzeugfertigungsanlage (10) sowie eine Fahrzeugfertigungsanlage (10) mit einer Steuervorrichtung (12).

## Beschreibung

Die Erfindung betrifft ein Verfahren zum Herstellen von verschiedenen Kraftfahrzeugen in einer Fahrzeugfertigungsanlage. Weitere Aspekte der Erfindung betreffen eine Steuervorrichtung für eine Fahrzeugfertigungsanlage sowie eine Fahrzeugfertigungsanlage mit einer Steuervorrichtung.

Derartige Verfahren sind aus der Serienfertigung von Kraftfahrzeugen bekannt, wobei sich eine Fließbandfertigung der Kraftfahrzeuge zur Einhaltung von erwünschten Lieferzeitpunkten und zur Optimierung von Fertigungsschritten bzw. -abläufen im Laufe der Zeit durchgesetzt hat.

Die Herstellung von Kraftfahrzeugen basiert häufig auf sogenannten Einplanungsreihenfolgen von Produktionsprozessen, welche häufig mehrere Tage oder Wochen vor Beginn der eigentlichen Fahrzeugherstellung festgelegt und bis zum tatsächlichen Produktionsbeginn unverändert belassen werden. Die Einplanungsreihenfolgen befinden sich dann in einem sogenannten "eingefrorenen", also unveränderbaren Zustand. Ein Anfordern von zur Fahrzeugherstellung benötigten Bauteilen bei entsprechenden Bauteillieferanten erfolgt dabei - zur rechtzeitigen Deckung des Bauteilbedarfs - in Abhängigkeit von derartigen Einplanungsreihenfolgen. Um auf unvorhergesehene Ereignisse reagieren zu können und gleichzeitig die zuvor festgelegten Einplanungsreihenfolgen, bzw. jeweilige, logistische Materialströme aufrechterhalten zu können, sind häufig sogenannte "Exception-Handlings" nötig. Bei derartigen "Exception-Handlings", welche auch als Nothandlungen bezeichnet werden können, werden teilweise besonders kostenintensive Maßnahmen getroffen, um eine fristgerechte Fertigung der Fahrzeuge in der Einplanungsreihenfolge einzuhalten. So kann beispielsweise im Rahmen einer derartigen Nothandlung sogar ein Anliefern von zur Einhaltung der Einplanungsreihenfolgen benötigten, fehlenden Bauteilen auf dem Luftweg, also beispielsweise per Helikopter erfolgen.

Aufgabe der vorliegenden Erfindung ist es, ein Verfahren, eine Steuervorrichtung sowie eine Fahrzeugfertigungsanlage der eingangs genannten Art zu schaffen, mittels welchen Verzögerungen beim Herstellen verschiedener Kraftfahrzeuge verringert werden können.

Diese Aufgabe wird durch ein Verfahren mit den Merkmalen des Patentanspruchs 1, durch eine Steuervorrichtung mit den Merkmalen des Patentanspruchs 8 sowie durch eine Fahrzeugfertigungsanlage mit den Merkmalen des Patentanspruchs 9 gelöst. Vorteilhafte Weiterbildungen der Erfindung sind durch die Unteransprüche gegeben.

Das erfindungsgemäße Verfahren zum Herstellen von verschiedenen Kraftfahrzeugen in einer Fahrzeugfertigungsanlage, umfasst zumindest die folgenden Schritte:
a) Ermitteln einer Soll-Produktionsreihenfolge der Kraftfahrzeuge;
b) Ermitteln wenigstens eines Soll-Bereitstellungsdatensatzes in Abhängigkeit von zum Fertigen der Kraftfahrzeuge in der Soll-Produktionsreihenfolge von verschiedenen, externen Teilelieferstationen bereitzustellenden Soll-Bereitstellungsmengen von Fahrzeugteilen, und in Abhängigkeit von jeweiligen Soll-Bereitstellungszeitpunkten der Soll-Bereitstellungsmengen der Fahrzeugteile;
c) Senden des Soll-Bereitstellungsdatensatzes an die externen Teilelieferstationen und dadurch Anfordern einer Bereitstellung der die jeweiligen externen Teilelieferstationen betreffenden Soll-Bereitstellungsmengen der verschiedenen Fahrzeugteile zu den jeweiligen Soll-Bereitstellungszeitpunkten;
d) Empfangen wenigstens eines Ist-Bereitstellungsdatensatzes von zumindest einer externen Teilelieferstation, wobei der Ist-Bereitstellungsdatensatz zu jeweiligen Ist-Bereitstellungszeitpunkten durch die jeweiligen Teilelieferstationen bereitstellbare Ist-Bereitstellungsmengen der Fahrzeugteile charakterisiert;
e) Ermitteln einer Ist-Produktionsreihenfolge in Abhängigkeit von dem wenigstens einen Ist-Bereitstellungsdatensatz, wenn sich der Ist-Bereitstellungsdatensatz von dem Soll-Bereitstellungsdatensatz unterscheidet;
f) Herstellen zumindest eines Teils der Kraftfahrzeuge in der Ist-Produktionsreihenfolge nach erfolgtem Bereitstellen der Ist-Bereitstellungsmengen, wenn sich der Ist-Bereitstellungsdatensatz von dem Soll-Bereitstellungsdatensatz unterscheidet oder Fertigen der verschiedenen Kraftfahrzeuge in der Soll-Produktionsreihenfolge, wenn der Ist-Bereitstellungsdatensatz mit dem Soll-Bereitstellungsdatensatz übereinstimmt.

Die Soll-Produktionsreihenfolge, welche auch als Soll-Einplanungsreihenfolge bezeichnet werden kann, kann beispielsweise in Abhängigkeit von vorgegebenen Fahrzeugbestellungen der jeweiligen Kraftfahrzeuge ermittelt werden. Durch die Soll-Produktionsreihenfolge kann vorgegeben werden, wann bei den jeweiligen Kraftfahrzeugen welche Produktionsschritte vorgenommen werden sollen um die jeweiligen Kraftfahrzeuge gemäß einem jeweils gewünschten Lieferzeitpunkt und damit rechtzeitig fertig zu stellen. Der Soll-Bereitstellungsdatensatz kann Informationen über die Soll-Bereitstellungsmengen der Fahrzeugteile sowie Informationen über die jeweiligen Soll-Bereitstellungszeitpunkte der Soll-Bereitstellungsmengen umfassen. Diese Soll-Bereitstellungszeitpunkte können dabei Zeitpunkte charakterisieren, zu welchen die jeweiligen Soll-Bereitstellungsmengen der Fahrzeugteile in bzw. an der Fahrzeugfertigungsanlage bereitgestellt sein sollen. Die Soll-Bereitstellungszeitpunkte können auch als Soll-Lieferzeitpunkte bezeichnet werden. Die Soll-Bereitstellungsmengen können jeweils Informationen beispielsweise zu einer Farbe, Größe und zusätzlich oder alternativ zu einer Art der jeweiligen Fahrzeugteile umfassen, um nur einige Beispiele zu nennen.

Das Senden des Soll-Bereitstellungsdatensatzes kann an alle externen Teilelieferstationen erfolgen. Beispielsweise kann auch eine der externen Teilelieferstationen, beispielsweise eine erste Teilelieferstation, einen, dieser einen (ersten) Teilelieferstation zugeordneten, (ersten) Ist-Bereitstellungsdatensatz an alle übrigen, externen Teilelieferstationen sowie beispielsweise an eine Steuervorrichtung der Fahrzeugfertigungsanlage senden. Eine weitere Teilelieferstation, beispielsweise eine zweite Teilelieferstation, der externen Teilelieferstationen kann einen, der weiteren (zweiten) Teilelieferstation zugeordneten, weiteren (zweiten) Ist-Bereitstellungsdatensatz an alle übrigen externen Teilelieferstationen sowie an die Steuervorrichtung der Fahrzeugfertigungsanlage senden, und so weiter. Dadurch ist insgesamt eine bidirektionale Echtzeit-Datenstromvernetzung zwischen der Fahrzeugfertigungsanlage, bzw. der Steuervorrichtung der Fahrzeugfertigungsanlage und den einzelnen externen Teilelieferstationen ermöglicht. Somit kann jede einzelne Teilelieferstation besonders rasch Auskunft darüber geben, inwiefern die durch diese jeweilige Teilelieferstationen bereitzustellenden Ist-Bereitstellungsmengen den Anforderungen des Soll-Bereitstellungsdatensatz entspricht, sodass beispielsweise auch die übrigen Teilelieferstationen darüber informiert werden können ob es Abweichungen zwischen dem Soll-Bereitstellungsdatensatz und den jeweiligen Ist-Bereitstellungsdatensatz dieser Teilelieferstation gibt. Derartige Abweichungen können beispielsweise auftreten, wenn eine Teilelieferstation die gewünschte Soll-Bereitstellungsmengen eines bestimmten, durch diese Teilelieferstationen bereitzustellenden Fahrzeugteils nicht oder nicht bis zum geforderten, jeweiligen Soll-Bereitstellungszeitpunkt bereitstellen kann. Durch die bidirektionale Echtzeit-Datenstromvernetzung der Teilelieferstationen untereinander können die Teilelieferstationen frühzeitig auf etwaige Lieferengpässe reagieren und diese Lieferengpässe auch gegenseitig ausgleichen. Dadurch können Verzögerungen beim Herstellen der verschiedenen Fahrzeuge insgesamt verringert werden.

Die Ist-Produktionsreihenfolge kann auch als "unchained-row"-Baureihenfolge bezeichnet werden. Die Ist-Produktionsreihenfolge kann dabei einer Reihenfolge entsprechen, nach welcher der mittels der vorhandenen Ist-Bereitstellungsmengen herstellbare Teil der Kraftfahrzeuge gefertigt werden kann. Anstatt wie bei aus dem Stand der Technik bekannten Herstellverfahren bei etwaigen fehlenden Bauteilen kostenintensive Nothandlungen ("exception-Handlings") durchzuführen, wird bei dem erfindungsgemäßen Verfahren die Reihenfolge der Herstellung der verschiedenen Kraftfahrzeuge bei einer Abweichung zwischen dem Ist-Bereitstellungsdatensatz und dem Soll-Bereitstellungsdatensatz geändert. So kann beispielsweise von der Soll-Produktionsreihenfolge auf die Ist-Produktionsreihenfolge umgestellt werden, wenn beispielsweise die durch eine der externen Teilelieferstationen bereitgestellte Ist-Bereitstellungsmenge von der ihr zugeordneten Soll-Bereitstellungsmenge abweicht und somit beispielsweise ein Teilemangel des durch diese Teilelieferstation bereitzustellenden Fahrzeugteils besteht. Durch dieses Umstellen von der Soll-Produktionsreihenfolge auf die Ist-Produktionsreihenfolge kann zumindest der Teil der Kraftfahrzeuge, für dessen Herstellung die entsprechenden Ist-Bereitstellungsmengen vorhanden sind, besonders zügig hergestellt werden. Anders als bei aus dem Stand der Technik bekannten Herstellverfahren, wird hierbei nicht die Herstellung ausgesetzt (gestoppt), bis die fehlenden Bauteile im Rahmen kostenintensiver Nothandlungen bereitgestellt sind, sondern es kann unmittelbar mit der Herstellung zumindest des besagten Teils der Kraftfahrzeuge in der Ist-Produktionsreihenfolge fortgefahren werden, wenn es zu einer Abweichung zwischen dem Soll-Bereitstellungsdatensatz und dem Ist-Bereitstellungsdatensatz kommt. Dadurch können ebenfalls Verzögerungen beim Herstellen der Kraftfahrzeuge verringert werden.

In einer vorteilhaften Weiterbildung der Erfindung erfolgt ein weiterer Schritt g) Senden zumindest eines, wenigstens eine Abweichung zwischen dem Soll-Bereitstellungsdatensatz und dem wenigstens einen Ist-Bereitstellungsdatensatz charakterisierenden Differenzdatensatzes an alle externen Teilelieferstationen und dadurch Anfordern einer Bereitstellung von Hochpriorisationsmengen der verschiedenen Fahrzeugteile zu jeweiligen Hochpriorisationszeitpunkten bei zumindest einer der externen Teilelieferstationen. Dies ist von Vorteil, da hierdurch die Hochpriorisationsmengen mit einer höheren Priorität als beispielsweise die Soll-Bereitstellungsmengen bei allen externen Teilelieferstationen angefordert werden können. Dadurch kann eine Nachlieferung fehlender Fahrzeugteile beschleunigt und damit insgesamt eine geringere Verzögerung bei der Herstellung der verschiedenen Kraftfahrzeuge bewirkt werden. Die externen Teilelieferstationen können mittels des Differenzdatensatzes über den Bedarf an den Hochpriorisationsmengen der verschiedenen Fahrzeugteile informiert werden. Die Hochpriorisationsmengen können dabei jeweiligen (fehlenden) Differenzmengen zwischen den Soll-Bereitstellungsmengen und den Ist-Bereitstellungsmengen der jeweiligen Fahrzeugteile entsprechen. Durch das Senden des Differenzdatensatzes kann also allgemein ein Anfordern fehlender Fahrzeugteile mit im Vergleich zu dem Soll-Bereitstellungsdatensatz erhöhter Priorität erfolgen. Zur Verdeutlichung kann das folgende, einfache Beispiel dienen:
Wurden beispielsweise 1000 Frontscheiben als Soll-Bereitstellungsmenge des Fahrzeugteils "Frontscheibe" angefordert, jedoch nur 800 Frontscheiben als Ist-Bereitstellungsmenge durch eine, für die Bereitstellung des Fahrzeugteils "Frontscheibe" zuständige, Teilelieferstation der externen Teilelieferstationen bereitgestellt, so kann durch das Senden des Differenzdatensatzes, in welchem die Hochpriorisationsmenge von 200 Frontscheiben als Differenz zwischen der Soll-Bereitstellungsmengen und der Ist-Bereitstellungsmengen beschrieben sein kann, mit gegenüber der Soll-Bereitstellungsmengen bzw. dem Soll-Bereitstellungsdatensatz erhöhter Priorität angefordert werden.

In einer weiteren vorteilhaften Weiterbildung der Erfindung wird der wenigstens eine Soll-Bereitstellungsdatensatz und/oder der wenigstens eine Ist-Bereitstellungsdatensatz in Echtzeit zwischen allen externen Teilelieferstationen untereinander und einer Steuervorrichtung der Fahrzeugfertigungsanlage ausgetauscht. Dies ist von Vorteil, da hierdurch ein besonders rascher Datenaustausch zwischen den externen Teilelieferstationen untereinander und der Steuervorrichtung gegeben ist und damit besonders schnell auf etwaige Bereitstellungsengpässe (Lieferengpässe) reagiert werden kann. Die externen Teilelieferstationen können allgemein einen externen Regelkreis bilden und sich damit gegenseitig darüber informieren, ob jeweils eine Teilelieferstation der externen Teilelieferstationen die von ihr angeforderte Soll-Bereitstellungsmenge bzw. Soll-Bereitstellungsmengen des jeweiligen Fahrzeugteils bzw. der jeweiligen Fahrzeugteile zu dem jeweiligen Soll-Bereitstellungszeitpunkt bzw. zu den jeweiligen Soll-Bereitstellungszeitpunkten in oder an der Fahrzeugfertigungsanlage bereitstellen kann. Die externen Teilelieferstationen und die Steuervorrichtung können allgemein insbesondere durch eine bidirektionale rückgekoppelte online-Vernetzung miteinander zum Datenaustausch verbunden sein, sodass der wenigstens eine Soll-Bereitstellungsdatensatz und zusätzlich der wenigstens eine Ist-Bereitstellungsdatensatz in Echtzeit zwischen allen externen Teilelieferstationen untereinander und der Steuervorrichtung ausgetauscht werden kann. So kann besonders rasch auf Bereitstellungsengpässe reagiert werden und etwaige Verzögerungen beim Herstellen der verschiedenen Fahrzeuge besonders wirksam verringert werden.

In einer weiteren vorteilhaften Weiterbildung der Erfindung wird bei einem Teilefehler wenigstens eines der Fahrzeugteile während der Herstellung der Fahrzeuge die Herstellung von, von dem Teilefehler betroffenen Fehlerfahrzeugen angehalten und eine Ersatzproduktionsreihenfolge ermittelt, auf deren Basis die Herstellung von, von dem Teilefehler unbetroffenen Restfahrzeugen fortgesetzt wird. Dies ist von Vorteil, da im Gegensatz zu konventionellen Herstellverfahren keine Unterbrechung des Produktionsbetriebs erfolgt, sondern lediglich die Herstellung der Fehlerfahrzeuge angehalten, jedoch die Herstellung der von dem Teilefehler unbetroffenen Restfahrzeuge fortgesetzt werden kann. Bei der Herstellung der verschiedenen Fahrzeuge können verschiedene Herstellungsschritte erforderlich sein, welche beispielsweise an verschiedenen Fertigungsstationen der Fahrzeugfertigungsanlage durchgeführt werden können. Ein Beispiel für einen Teilefehler eines Fahrzeugteils stellt eine Beschädigung des Fahrzeugteils während dessen Montage dar, um nur ein Beispiel zu nennen.

In einer weiteren vorteilhaften Weiterbildung der Erfindung wird eine Bereitstellung eines, das wenigstens eine von dem Teilefehler betroffene Fahrzeugteil ersetzenden Ersatzteils unter einer Maximalpriorisierung bei zumindest einer der externen Teilelieferstationen angefordert. Dies ist von Vorteil, da durch die Maximalpriorisierung eine besonders rasche Bereitstellung des Ersatzteils durch eine der externen Lieferstationen bzw. eine besonders rasche Bereitstellung von mehreren verschiedenen Ersatzteilen durch mehrere der externen Lieferstationen und damit ein besonders zügiges Fortsetzen des Herstellungsprozesses des von dem fehlerhaften Fahrzeugbauteils betroffenen Fahrzeugs bzw. der von mehreren fehlerhaften Fahrzeugbauteilen betroffenen Fahrzeugen erreicht werden kann. Die Maximalpriorisierung kann dabei einer höchstmöglichen Priorisierung entsprechen.

In einer weiteren vorteilhaften Weiterbildung der Erfindung erfolgt das Ermitteln der Soll-Produktionsreihenfolge in Schritt a) in Abhängigkeit von einem Perlenkettenprinzip. Dies ist von Vorteil, da das Perlenkettenprinzip, welches auch als "Perlenkette" bezeichnet werden kann, ein besonders effizientes Herstellen der verschiedenen Kraftfahrzeuge innerhalb eines vorbestimmten Zeitraums ermöglicht. Mit dem Begriff "Perlenkette" kann ein Festlegen einer Auftragsreihenfolge bzw. Fertigungsreihenfolge bezeichnet werden.

In einer weiteren vorteilhaften Weiterbildung der Erfindung erfolgen das Ermitteln der Soll-Produktionsreihenfolge in Schritt a) und das Ermitteln der Ist-Produktionsreihenfolge in Schritt e) in Abhängigkeit von wenigstens einem Fertigungstakt der Fahrzeugfertigungsanlage. Dies ist von Vorteil, da hierdurch eine besonders günstige Auslastung der Fahrzeugfertigungsanlage ermöglicht ist. Der Fertigungstakt kann beispielsweise einer zur Herstellung verfügbaren Fließbandlänge entsprechen. Die Soll-Produktionsreihenfolge kann an die verfügbare Fließbandlänge angepasst sein. Als der Fertigungstakt kann beispielsweise eine Fließbandlänge von 6 m herangezogen werden, d.h ein Fertigungstakt kann einer Länge von beispielsweise 6 m entsprechen.

Ein zweiter Aspekt der Erfindung betrifft eine Steuervorrichtung für eine Fahrzeugfertigungsanlage zum Herstellen von verschiedenen Kraftfahrzeugen, wobei die Steuervorrichtung zumindest dazu ausgebildet ist:
a) eine Soll-Produktionsreihenfolge der Kraftfahrzeuge zu ermitteln;
b) wenigstens einen Soll-Bereitstellungsdatensatz in Abhängigkeit von zum Fertigen der Kraftfahrzeuge in der Soll-Produktionsreihenfolge von verschiedenen, externen Teilelieferstationen bereitzustellenden Soll-Bereitstellungsmengen von Fahrzeugteilen, und in Abhängigkeit von jeweiligen Soll-Bereitstellungszeitpunkten der Soll-Bereitstellungsmengen der Fahrzeugteile zu ermitteln;
c) den Soll-Bereitstellungsdatensatz an die externen Teilelieferstationen zu senden und dadurch eine Bereitstellung der, die jeweiligen externen Teilelieferstationen betreffenden Soll-Bereitstellungsmengen der verschiedenen Fahrzeugteile zu den jeweiligen Soll-Bereitstellungszeitpunkten anzufordern;
d) wenigstens einen Ist-Bereitstellungsdatensatz von zumindest einer externen Teilelieferstation zu empfangen, wobei der Ist-Bereitstellungsdatensatz zu jeweiligen Ist-Bereitstellungszeitpunkten durch die jeweiligen Teilelieferstationen bereitstellbare Ist-Bereitstellungsmengen der Fahrzeugteile charakterisiert;
e) eine Ist-Produktionsreihenfolge in Abhängigkeit von dem wenigstens einen Ist-Bereitstellungsdatensatz zu ermitteln, wenn sich der Ist-Bereitstellungsdatensatz von dem Soll-Bereitstellungsdatensatz unterscheidet.

Zu der Erfindung gehört auch die Steuervorrichtung für eine Fahrzeugfertigungsanlage. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Durch die Steuervorrichtung können Verzögerungen beim Herstellen verschiedener Kraftfahrzeuge besonders weitgehend verringert werden.

Ein dritter Aspekt der Erfindung betrifft eine Fahrzeugfertigungsanlage mit wenigstens einer erfindungsgemäßen Steuervorrichtung, wobei die Fahrzeugfertigungsanlage dazu ausgebildet ist, zumindest einen Teil der Kraftfahrzeuge in der Ist-Produktionsreihenfolge nach erfolgtem Bereitstellen der Ist-Bereitstellungsmengen herzustellen, wenn sich der Ist-Bereitstellungsdatensatz von dem Soll-Bereitstellungsdatensatz unterscheidet und wobei die Fahrzeugfertigungsanlage dazu ausgebildet ist, die verschiedenen Kraftfahrzeuge in der Soll-Produktionsreihenfolge herzustellen, wenn der Ist-Bereitstellungsdatensatz mit dem Soll-Bereitstellungsdatensatz übereinstimmt. Durch die Fahrzeugfertigungsanlage können Verzögerungen beim Herstellen verschiedener Kraftfahrzeuge besonders weitgehend verringert werden. Unterscheidet sich der Ist-Bereitstellungsdatensatz von dem Soll-Bereitstellungsdatensatz, so ermöglicht die Fahrzeugfertigungsanlage ein Herstellen zumindest des Teils der Kraftfahrzeuge in der, von der Soll-Produktionsreihenfolge abweichenden Ist-Produktionsreihenfolge. Die Ist-Produktionsreihenfolge kann auch als sogenannte "unchained row"-Baureihenfolge bezeichnet werden, bei welcher beispielsweise von einem "Perlenkettenprinzip" der Soll-Produktionsreihenfolge abgewichen werden kann.

Zu der Erfindung gehören auch Weiterbildungen der erfindungsgemäßen Steuervorrichtung sowie der erfindungsgemäßen Fahrzeugfertigungsanlage, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Steuervorrichtung sowie der erfindungsgemäßen Fahrzeugfertigungsanlage hier nicht noch einmal beschrieben.

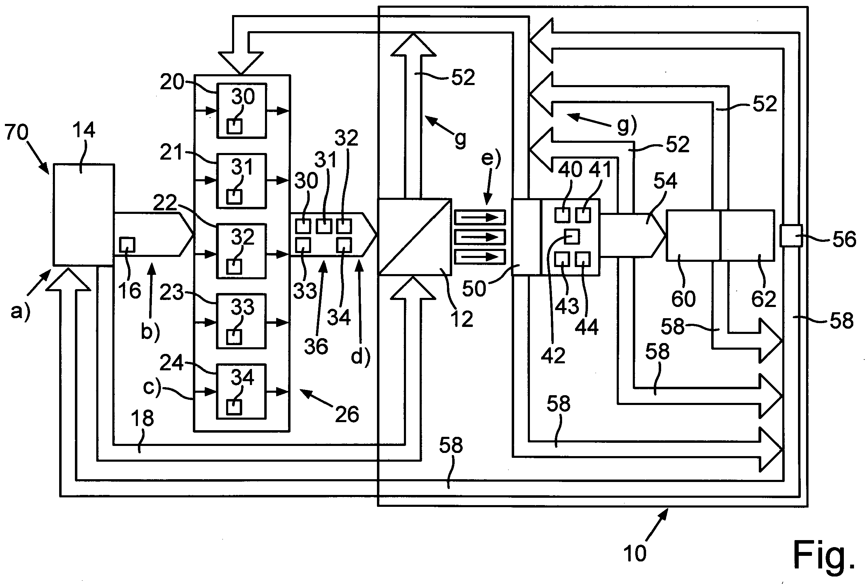

Im Folgenden ist ein Ausführungsbeispiel der Erfindung beschrieben. Hierzu zeigt die einzige Fig. ein Diagramm, welches verschiedene Verfahrensschritte des erfindungsgemäßen Verfahrens zeigt.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

Die Fig. zeigt einzelne Schritte eines Verfahrens zum Herstellen von verschiedenen Kraftfahrzeugen 60, 62 in einer vorliegend lediglich schematisch angedeuteten Fahrzeugfertigungsanlage 10. Lediglich aus Gründen der Übersichtlichkeit ist im Folgenden von der Herstellung von lediglich zwei Kraftfahrzeugen 60, 62 die Rede, es ist jedoch klar, dass in der Fahrzeugfertigungsanlage 10 eine Vielzahl von Kraftfahrzeugen im Rahmen einer Fließbandfertigung hergestellt werden kann. Die nachfolgend beschriebenen Schritte a) bis e) sowie der Schritt g) können allgemein durch eine Steuervorrichtung 12 der Fahrzeugfertigungsanlage 10 durchgeführt werden. Die Steuervorrichtung 12 kann allgemein auch als Online-Traffic-Regler bezeichnet werden. Für den nachfolgend ebenfalls beschriebenen Schritt f) werden zusätzlich verschiedene Fertigungsstationen der Fahrzeugfertigungsanlage 10 herangezogen. Die verschiedenen Fertigungsstationen werden bis zum Erreichen eines Fertigungsendes 56, bei welchem die Herstellung der Kraftfahrzeuge 60, 62 abgeschlossen sein kann, durchlaufen.

In dem Schritt a) erfolgt zunächst ein Ermitteln einer Soll-Produktionsreihenfolge 14 der Kraftfahrzeuge 60, 62 in Abhängigkeit von einem Perlenkettenprinzip. Die Soll-Produktionsreihenfolge 14 kann auch als vorläufige Produktionsreihenfolge bezeichnet werden.

In einem Schritt b) erfolgt weiterhin ein Ermitteln wenigstens eines Soll-Bereitstellungsdatensatzes 16 in Abhängigkeit von zum Fertigen der Kraftfahrzeuge 60, 62 in der Soll-Produktionsreihenfolge 14 von verschiedenen, externen Teilelieferstationen 20, 21, 22, 23, 24 bereitzustellenden Soll-Bereitstellungsmengen von Fahrzeugteilen, und in Abhängigkeit von jeweiligen Soll-Bereitstellungszeitpunkten der Soll-Bereitstellungsmengen der Fahrzeugteile.

Die externen Teilelieferstationen 20, 21, 22, 23, 24 - welche auch als Lieferanten bezeichnet werden können - können, wie vorliegend gezeigt, in einem externen Regelkreis 26 zur Datenübertragung miteinander verbunden, also miteinander vernetzt sein.

In einem Schritt c) erfolgt ein Senden des Soll-Bereitstellungsdatensatzes 16 an die externen Teilelieferstationen 20, 21, 22, 23, 24 und dadurch ein Anfordern einer Bereitstellung der die jeweiligen externen Teilelieferstationen 20, 21, 22, 23, 24 betreffenden Soll-Bereitstellungsmengen der verschiedenen Fahrzeugteile zu den jeweiligen Soll-Bereitstellungszeitpunkten. Der Soll-Bereitstellungsdatensatz 16 kann dabei einzelne, den externen Teilelieferstationen 20, 21, 22, 23, 24 zu übermittelnde Soll-Materialbedarfe umfassen, wobei allen Teilelieferstationen 20, 21, 22, 23, 24 alle Soll-Materialbedarfe übermittelt werden.

In einem Schritt d) erfolgt ein Empfangen jeweiliger Ist-Bereitstellungsdatensätze 30, 31, 32, 33, 34 von den jeweiligen externen Teilelieferstation 20, 21, 22, 23, 24 durch einen Ist-Bestandsregler 36 der Steuervorrichtung 12, wobei die Ist-Bereitstellungsdatensätze 30, 31, 32, 33, 34 zu jeweiligen Ist-Bereitstellungszeitpunkten durch die jeweiligen Teilelieferstationen 20, 21, 22, 23, 24 bereitstellbare Ist-Bereitstellungsmengen 40, 41, 42, 43, 44 der Fahrzeugteile charakterisieren. Durch den Ist-Bestandsregler 36 kann basierend auf den Ist-Bereitstellungsdatensätzen 30, 31, 32, 33, 34 eine Ist-Materialverfügbarkeit zur Herstellung der Kraftfahrzeuge 60, 62 erfasst werden.

Der wenigstens eines Soll-Bereitstellungsdatensatz 16 und die Ist-Bereitstellungsdatensätze 30, 31, 32, 33, 34 können in Echtzeit zwischen allen externen Teilelieferstationen 20, 21, 22, 23, 24 untereinander und einer Steuervorrichtung 12 der Fahrzeugfertigungsanlage 10 ausgetauscht werden.

In einem Schritt e) erfolgt ein Ermitteln einer Ist-Produktionsreihenfolge 50 in Abhängigkeit von den, von den einzelnen externen Teilelieferstationen 20, 21, 22, 23, 24 übermittelten Ist-Bereitstellungsdatensätzen 30, 31, 32, 33, 34, wenn sich die Ist-Bereitstellungsdatensätze 30, 31, 32, 33, 34 von dem Soll-Bereitstellungsdatensatz 16 unterscheiden.

Das Ermitteln der Soll-Produktionsreihenfolge 14 in Schritt a) und das Ermitteln der Ist-Produktionsreihenfolge 50 in Schritt e) kann allgemein in Abhängigkeit von wenigstens einem Fertigungstakt der Fahrzeugfertigungsanlage 10 erfolgen. Der Fertigungstakt entspricht im vorliegenden Ausführungsbeispiel einer Länge von 6 m.

In einem Schritt f) erfolgt ein vollständiges Herstellen, also eine Endfertigung, zumindest eines Teils der Kraftfahrzeuge 60, 62 in der Fahrzeugfertigungsanlage 10 und in der Ist-Produktionsreihenfolge 50 nach erfolgtem Bereitstellen der Ist-Bereitstellungsmengen 40, 41, 42, 43, 44, wenn sich zumindest einer der Ist-Bereitstellungsdatensätze 30, 31, 32, 33, 34 von dem Soll-Bereitstellungsdatensatz 16 unterscheidet oder ein Fertigen der verschiedenen Kraftfahrzeuge 60, 62 in der Soll-Produktionsreihenfolge 14, wenn der Ist-Bereitstellungsdatensatz 30, 31, 32, 33, 34 mit dem Soll-Bereitstellungsdatensatz 16 übereinstimmt.

Im vorliegenden Ausführungsbeispiel wird davon ausgegangen, dass zwischen den Ist-Bereitstellungsdatensätzen 30, 31, 32, 33, 34 von dem Soll-Bereitstellungsdatensatz 16 ein Unterschied besteht. Die Ist-Bereitstellungsdatensätze 30, 31, 32, 33, 34 können allgemein in ihrer Gesamtheit einen Ist-Gesamtbereitstellungsdatensatz bilden, welcher mit dem Soll-Bereitstellungsdatensatz 16 verglichen werden kann. Mit anderen Worten können die Ist-Bereitstellungsdatensätze 30, 31, 32, 33, 34 allgemein zudem Ist-Gesamtbereitstellungsdatensatz zusammengefasst sein und mit dem Soll-Bereitstellungsdatensatz 16 verglichen werden. Eine Abweichung und damit ein Unterschied zwischen dem Soll-Bereitstellungsdatensatz 16 und dem Ist-Gesamtbereitstellungsdatensatz besteht beispielsweise dann, wenn bereits eine der externen Lieferstationen 20, 21, 22, 23, 24 dem von ihr geforderten Soll-Materialbedarf nicht nachkommen kann. Dies ist beispielsweise dann der Fall, wenn der erste Ist-Bereitstellungsdatensatz 30 der ersten externen Teilelieferstation 20 von dem von ihr, durch den Soll-Bereitstellungsdatensatz 16 angeforderten Soll-Materialbedarf abweicht, um nur ein Beispiel zu nennen.

In dem Schritt g) erfolgt ein Senden zumindest eines, wenigstens eine Abweichung zwischen dem Soll-Bereitstellungsdatensatz 16 und zumindest einem der Ist-Bereitstellungsdatensätze 30, 31, 32, 33, 34 charakterisierenden Differenzdatensatzes 52 an alle externen Teilelieferstationen 20, 21, 22, 23, 24 und dadurch Anfordern einer Bereitstellung von Hochpriorisationsmengen der verschiedenen Fahrzeugteile zu jeweiligen Hochpriorisationszeitpunkten bei zumindest einer der externen Teilelieferstationen 20, 21, 22, 23, 24.

Der Schritt g) kann allgemein, wie aus der Fig. hervorgeht, sowohl vor dem Beginn der Herstellung der verschiedenen Kraftfahrzeuge 60, 62 auf Basis der Ist-Produktionsreihenfolge 50 (oder auf Basis der Soll-Produktionsreihenfolge 14), als auch während der Herstellung der Kraftfahrzeuge 60, 62 in den verschiedenen Fertigungsstationen erfolgen. Dadurch kann dem Umstand Rechnung getragen werden, dass es sowohl vor Beginn der Herstellung der Kraftfahrzeuge 60, 62 als auch während der Herstellung der Kraftfahrzeuge 60, 62 an verschiedenen Fertigungsstationen der Fahrzeugfertigungsanlage 10 zu Abweichungen zwischen dem Soll-Bereitstellungsdatensatz 16 und einem oder mehreren der Ist-Bereitstellungsdatensätze 30, 31, 32, 33, 34 kommen kann. Zu einer Abweichung während der Herstellung der Kraftfahrzeuge 60, 62 kann es beispielsweise dann kommen, wenn Fahrzeugteile beispielsweise während einer Montage an einer der Fertigungsstationen beschädigt werden und damit für die Herstellung der Kraftfahrzeuge 60, 62 nicht mehr verwendet werden können. Dies kann zumindest zu einer Änderung eines der Soll-Bereitstellungsdatensätze 30, 31, 32, 33, 34 während der Herstellung führen. Eine derartige Beschädigung von Fahrzeugteilen kann dabei einem Teilefehler eines Fahrzeugteils oder mehrerer Fahrzeugteile entsprechen. Bei einem Teilefehler wenigstens eines der Fahrzeugteile während der Herstellung der Fahrzeuge 60, 62 kann die Herstellung von, von dem Teilefehler betroffenen Fehlerfahrzeugen angehalten und eine Ersatzproduktionsreihenfolge 54 ermittelt werden, auf deren Basis die Herstellung von, von dem Teilefehler unbetroffenen Restfahrzeugen fortgesetzt werden kann. Die von dem Teilefehler betroffenen Fehlerfahrzeuge können aus dem Herstellungsprozess ausgegliedert und beispielsweise von einem Fließband genommen werden, bis eine Bereitstellung eines, das wenigstens eine von dem Teilefehler betroffene Fahrzeugteil ersetzenden Ersatzteils unter einer Maximalpriorisierung bei zumindest einer der externen Teilelieferstationen 20, 21, 22, 23, 24 angefordert und schließlich geliefert wurde. Zusammenfassend kann in Schritt g) allgemein eine priorisierte Bestandsnachregelung erfolgen. Die Priorisierung der Bestandsnachregelung kann dabei umso höher sein, je weiter die Herstellung der Kraftfahrzeuge 60, 62 fortgeschritten ist.

Mittels der, mit der Steuervorrichtung 12 ausgestatteten, Fahrzeugfertigungsanlage 10 kann zusammenfassend zumindest ein Teil der Kraftfahrzeuge 60, 62 in der Ist-Produktionsreihenfolge 50 nach erfolgtem Bereitstellen der Ist-Bereitstellungsmengen 40, 41, 42, 43, 44 hergestellt werden, wenn sich der Ist-Bereitstellungsdatensatz 30, 31, 32, 33, 34 von dem Soll-Bereitstellungsdatensatz 16 unterscheidet. Die Ist-Produktionsreihenfolge 50 kann allgemein auch als "unchained-row"-Baureihenfolge bezeichnet werden, bei welcher von dem, im vorliegenden Ausführungsbeispiel der Soll-Produktionsreihenfolge 14 zugrunde liegenden, Perlenkettenprinzip abgewichen werden kann. Mittels der Fahrzeugfertigungsanlage 10 können die verschiedenen Kraftfahrzeuge 60, 62 in der Soll-Produktionsreihenfolge 14 hergestellt werden, wenn der Ist-Bereitstellungsdatensatz 30, 31, 32, 33, 34 mit dem Soll-Bereitstellungsdatensatz 16 übereinstimmt.

Insgesamt zeigt das Beispiel allgemein, wie durch die Erfindung das Herstellen in der Ist-Produktionsreihenfolge 50 und damit ein Abweichen von der Herstellung gemäß der starren Soll-Produktionsreihenfolge 14 ermöglicht ist, um auf tatsächlich eingetretene Realitäten, wie beispielsweise eine Beschädigung von Fahrzeugteilen während der Herstellung der Kraftfahrzeuge 60, 62 oder beispielsweise eine Abweichung zwischen dem Soll-Bereitstellungsdatensatz 16 und den Ist-Bereitstellungsdatensätzen 30, 31, 32, 33, 34 besonders rasch zu reagieren. Kommt es beispielsweise zu einer Beschädigung von Fahrzeugteilen während der Herstellung der Kraftfahrzeuge 60, 62, so kann kurzfristig auf die Ersatzproduktionsreihenfolge 54 umgestellt werden. Somit ist insgesamt eine ständige Anpassung des Herstellungsprozesses als Reaktion auf etwaige Störfälle (z.B. Beschädigung von Fahrzeugteilen) dadurch ermöglicht, dass auch die Ist-Produktionsreihenfolge 50 sogar während der Herstellung der Kraftfahrzeuge 60, 62 beim Durchlaufen der verschiedenen Fertigungsstationen angepasst und bei auftretenden Fehlern unter Heranziehen der Ersatzproduktionsreihenfolge 54 zumindest für einen Teil der Kraftfahrzeuge 60, 62 fortgesetzt werden kann. Ausgehend von den einzelnen Fertigungsstationen sowie kurz vor Erreichen des Fertigungsendes 56 können auch, durch jeweilige Pfeile verdeutlichte Bedarfs-Nachregelungen 58 erfolgen, durch welche im Rahmen eines in sich geschlossenen Regelkreises auch Änderungen an der Soll-Produktionsreihenfolge 14 durchgeführt werden können.

Der Erfindung liegt dabei eine bidirektionale, echtzeitliche Datenstromvernetzung zwischen den einzelnen, externen Teilelieferstationen 20, 21, 22, 23, 24 und der Fahrzeugfertigungsanlage 10 bzw. der Steuervorrichtung 12 zugrunde. Der Soll-Bereitstellungsdatensatz 16 kann ebenso wie die einzelnen Ist-Bereitstellungsdatensätze 30, 31, 32, 33, 34 in Echtzeit zwischen allen externen Teilelieferstationen 20, 21, 22, 23, 24 untereinander und der Steuervorrichtung 12 der Fahrzeugfertigungsanlage 10 ausgetauscht werden. Dieser bidirektionale Austausch (bidirektionale, echtzeitliche Datenstromvernetzung) ist auch während der Herstellung der Kraftfahrzeuge 60, 62 also beispielsweise durch Übermittlung des Differenzdatensatzes 52 durch die Steuervorrichtung 12 ermöglicht. Dadurch kann besonders schnell auf die beschriebenen Störfälle reagiert und gegebenenfalls Ersatzteile von einer oder von mehreren der externen Teilelieferstationen 20, 21, 22, 23, 24 beschafft werden. Insgesamt können also alle Einflussmöglichkeiten entlang einer Versorgungskette berücksichtigt werden und dabei allgemein besonders schnell auf sämtliche Störfälle vor und während der Herstellung der Kraftfahrzeuge 60, 62 reagiert werden. Die ursprünglich aufgesetzte, vorgegebene Soll-Produktionsreihenfolge 14, welche auch als Auftragsreihenfolge bezeichnet werden kann, kann somit durch deren Abänderung in die Ist-Produktionsreihenfolge 50 bzw. in die Ersatzproduktionsreihenfolge 54 mit aktuellsten Materialstromdaten rückgekoppelt angepasst werden, wobei tatsächlich vorhandene Liefermengen (Ist-Bereitstellungsmengen 40, 41, 42, 43, 44) berücksichtigt werden. Das rückgekoppelte Anpassen kann bereits vor Beginn der Herstellung der Kraftfahrzeuge 60, 62 in einem sogenannten "Inboundprozess" stattfinden als auch während der Herstellung und somit "line-back" innerhalb des Fertigungsprozesses der Kraftfahrzeuge 60, 62 ergänzend aufgebaut werden.

Dadurch ist es möglich, zumindest weitestgehend auf sämtliche Nothandlungen ("exception handlings") zu verzichten, zumal durch die Echtzeitdatenanpassung etwaige Abweichungen zwischen den Ist-Bereitstellungsdatensätzen 30, 31, 32, 33, 34 und dem Soll-Bereitstellungsdatensatz 16 besonders schnell korrigiert werden können. Die Prozessqualität innerhalb der jeweils angepassten Reihenfolgen (Ist-Produktionsreihenfolge 50, Ersatzproduktionsreihenfolge 54) ist somit besonders stabil.

Mit dem Soll-Bereitstellungsdatensatz 16 können insgesamt Lieferinformationen abgeleitet aus einem geplanten Fertigungsprogramm der Kraftfahrzeuge 60, 62 an die externen Teilelieferstationen 20, 21, 22, 23, 24, also an die Lieferanten der verschiedenen Fahrzeugteile übermittelt werden. Die Soll-Produktionsreihenfolge 14 sowie der Soll-Bereitstellungsdatensatz 16 können entweder durch eine externe Rechenvorrichtung 70 vorgegeben sein, oder zentral durch die Steuervorrichtung 12 anhand von extern vorgegebenen Fahrzeugbestellterminen und/oder Fahrzeugendfertigungsterminen der Kraftfahrzeuge 60, 62 ermittelt werden. Mit anderen Worten kann die Steuervorrichtung 12 dazu ausgebildet sein, zumindest die Schritte a) bis e) des Verfahrens durchzuführen. Bei einer Ermittlung der Soll-Produktionsreihenfolge 14 durch die externe Rechenvorrichtung 70 kann die Soll-Produktionsreihenfolge 14 über einen, durch einen Pfeil verdeutlichten Soll-Bedarfsregler 18 an die Steuervorrichtung 12 durch Datenübertragung übermittelt werden.

Jede der, über den externen Regelkreis 26 miteinander vernetzten, externen Lieferstationen 20, 21, 22, 23, 24 kann über den Ist-Bestandsregler 36 in Echtzeit deren jeweiligen Produktionsstatus in Form der jeweiligen Ist-Materialverfügbarkeit, also der jeweiligen Ist-Bereitstellungsdatensätze 30, 31, 32, 33, 34 an den Ist-Bestandsregler 36 und damit an die Steuervorrichtung 12 übermitteln.

Wird die Soll-Produktionsreihenfolge 14 von der externen Rechenvorrichtung 70 ermittelt, so laufen allgemein die Soll-Produktionsreihenfolge 14 über den Soll-Bedarfsregler 18 und der Ist-Bestandsregler 36 (und damit die einzelnen Ist-Bereitstellungsdatensätze 30, 31, 32, 33, 34) an der Steuervorrichtung 12 zusammen. Bei einer Abweichung der Ist-Bereitstellungsdatensätze 30, 31, 32, 33, 34 von dem Soll-Bereitstellungsdatensatz 16 kann mittels der Steuervorrichtung 12 die Ist-Produktionsreihenfolge 50 als neue mögliche Reihenfolge ohne Fehlteile generiert, also ermittelt werden.

Bei einer Abweichung zwischen dem Soll-Bereitstellungsdatensatz 16 und den Ist-Bereitstellungsdatensätzen 30, 31, 32, 33, 34 kann der Differenzdatensatz 52 und damit ein entstandenes Defizit zwischen dem geforderten "Soll" und dem erhaltenen "Ist" mit den externen Teilelieferstationen 20, 21, 22, 23, 24 rückgekoppelt werden und definiert somit einen neuen Materialbedarf. Von der, der Fertigung und damit der Herstellung der Kraftfahrzeuge 60, 62 vorgelagerten Steuervorrichtung 12 kann somit ein auf logistische Baubarkeit korrigiertes Fertigungsprogramm durch die Ist-Produktionsreihenfolge 50 als neue Baureihenfolge weitergegeben werden. Die bei der Herstellung, also beim Durchlaufen der einzelnen Fertigungsschritte letztendlich aufgelegte bzw. eingesteuerte Produktionsreihenfolge (Soll-Produktionsreihenfolge 14 bzw. Ist-Produktionsreihenfolge 50) ist erst ab einem zuvor individuell definierten Zeitpunkt festgelegt.

Eine klassische "shortdistance Just-in-sequence-Produktion" oder eine "shortdistance Just-in-time-Produktion" kann nach wie vor zum Zeitpunkt eines Auslagern aus einem Sequenzer definiert werden. Eine klassischer "longdistance Just-in-sequence-Zeithaushalt" oder ein "longdistance Just-in-time-Zeithaushalt" kann somit um eine zugelassene Dauer zur Generierung der jeweiligen, fließenden Ist-Reihenfolge, also der Ist-Produktionsreihenfolge 50 bzw. der Ersatzproduktionsreihenfolge 54 reduziert werden.

## Patentansprüche

1. Verfahren zum Herstellen von verschiedenen Kraftfahrzeugen (60, 62) in einer Fahrzeugfertigungsanlage (10), mit zumindest den folgenden Schritten:
a) Ermitteln einer Soll-Produktionsreihenfolge (14) der Kraftfahrzeuge (60, 62);
b) Ermitteln wenigstens eines Soll-Bereitstellungsdatensatzes (16) in Abhängigkeit von zum Fertigen der Kraftfahrzeuge (60, 62) in der Soll-Produktionsreihenfolge (14) von verschiedenen, externen Teilelieferstationen (20, 21, 22, 23, 24) bereitzustellenden Soll-Bereitstellungsmengen von Fahrzeugteilen, und in Abhängigkeit von jeweiligen Soll-Bereitstellungszeitpunkten der Soll-Bereitstellungsmengen der Fahrzeugteile;
c) Senden des Soll-Bereitstellungsdatensatzes (16) an die externen Teilelieferstationen (20, 21, 22, 23, 24) und dadurch Anfordern einer Bereitstellung der die jeweiligen externen Teilelieferstationen (20, 21, 22, 23, 24) betreffenden Soll-Bereitstellungsmengen der verschiedenen Fahrzeugteile zu den jeweiligen Soll-Bereitstellungszeitpunkten ;
d) Empfangen wenigstens eines Ist-Bereitstellungsdatensatzes (30, 31, 32, 33, 34) von zumindest einer externen Teilelieferstation (20, 21, 22, 23, 24), wobei der Ist-Bereitstellungsdatensatz (30, 31, 32, 33, 34) zu jeweiligen Ist-Bereitstellungszeitpunkten durch die jeweiligen Teilelieferstationen (20, 21, 22, 23, 24) bereitstellbare Ist-Bereitstellungsmengen (40, 41, 42, 43, 44) der Fahrzeugteile charakterisiert;
e) Ermitteln einer Ist-Produktionsreihenfolge (50) in Abhängigkeit von dem wenigstens einen Ist-Bereitstellungsdatensatz (30, 31, 32, 33, 34), wenn sich der Ist-Bereitstellungsdatensatz (30, 31, 32, 33, 34) von dem Soll-Bereitstellungsdatensatz (16) unterscheidet;
f) Herstellen zumindest eines Teils der Kraftfahrzeuge (60, 62) in der Ist-Produktionsreihenfolge (50) nach erfolgtem Bereitstellen der Ist-Bereitstellungsmengen (40, 41, 42, 43, 44), wenn sich der Ist-Bereitstellungsdatensatz (30, 31, 32, 33, 34) von dem Soll-Bereitstellungsdatensatz (16) unterscheidet oder Fertigen der verschiedenen Kraftfahrzeuge (60, 62) in der Soll-Produktionsreihenfolge (14), wenn der Ist-Bereitstellungsdatensatz (30, 31, 32, 33, 34) mit dem Soll-Bereitstellungsdatensatz (16) übereinstimmt.

2. Verfahren nach Anspruch 1,
**gekennzeichnet durch** den weiteren Schritt
g) Senden zumindest eines, wenigstens eine Abweichung zwischen dem Soll-Bereitstellungsdatensatz (16) und dem wenigstens einen Ist-Bereitstellungsdatensatz (30, 31, 32, 33, 34) charakterisierenden Differenzdatensatzes (52) an alle externen Teilelieferstationen (20, 21, 22, 23, 24) und dadurch Anfordern einer Bereitstellung von Hochpriorisationsmengen der verschiedenen Fahrzeugteile zu jeweiligen Hochpriorisationszeitpunkten bei zumindest einer der externen Teilelieferstationen (20, 21, 22, 23, 24).

3. Verfahren nach Anspruch 1 oder 2,
**dadurch gekennzeichnet, dass**
der wenigstens eines Soll-Bereitstellungsdatensatz (16) und/oder der wenigstens eines Ist-Bereitstellungsdatensatz (30, 31, 32, 33, 34) in Echtzeit zwischen allen externen Teilelieferstationen (20, 21, 22, 23, 24) untereinander und einer Steuervorrichtung (12) der Fahrzeugfertigungsanlage (10) ausgetauscht wird.

4. Verfahren nach einem der vorhergehenden Ansprüche,
**dadurch gekennzeichnet, dass**
bei einem Teilefehler wenigstens eines der Fahrzeugteile während der Herstellung der Fahrzeuge die Herstellung von, von dem Teilefehler betroffenen Fehlerfahrzeugen angehalten und eine Ersatzproduktionsreihenfolge (54) ermittelt wird, auf deren Basis die Herstellung von, von dem Teilefehler unbetroffenen Restfahrzeugen fortgesetzt wird.

5. Verfahren nach Anspruch 4,
**dadurch gekennzeichnet, dass**
eine Bereitstellung eines, das wenigstens eine von dem Teilefehler betroffene Fahrzeugteil ersetzenden Ersatzteils unter einer Maximalpriorisierung bei zumindest einer der externen Teilelieferstationen (20, 21, 22, 23, 24) angefordert wird.

6. Verfahren nach einem der vorhergehenden Ansprüche,
**dadurch gekennzeichnet, dass**
das Ermitteln der Soll-Produktionsreihenfolge (14) in Schritt a) in Abhängigkeit von einem Perlenkettenprinzip erfolgt.

7. Verfahren nach einem der vorhergehenden Ansprüche,
**dadurch gekennzeichnet, dass**
das Ermitteln der Soll-Produktionsreihenfolge (14) in Schritt a) und das Ermitteln der Ist-Produktionsreihenfolge (50) in Schritt e) in Abhängigkeit von wenigstens einem Fertigungstakt der Fahrzeugfertigungsanlage (10) erfolgen.

8. Steuervorrichtung (12) für eine Fahrzeugfertigungsanlage (10) zum Herstellen von verschiedenen Kraftfahrzeugen (60, 62), wobei die Steuervorrichtung (12) zumindest dazu ausgebildet ist:
a) eine Soll-Produktionsreihenfolge (14) der Kraftfahrzeuge (60, 62) zu ermitteln;
b) wenigstens einen Soll-Bereitstellungsdatensatz (16) in Abhängigkeit von zum Fertigen der Kraftfahrzeuge (60, 62) in der Soll-Produktionsreihenfolge (14) von verschiedenen, externen Teilelieferstationen (20, 21, 22, 23, 24) bereitzustellenden Soll-Bereitstellungsmengen von Fahrzeugteilen, und in Abhängigkeit von jeweiligen Soll-Bereitstellungszeitpunkten der Soll-Bereitstellungsmengen der Fahrzeugteile zu ermitteln;
c) den Soll-Bereitstellungsdatensatz (16) an die externen Teilelieferstationen (20, 21, 22, 23, 24) zu senden und dadurch eine Bereitstellung der, die jeweiligen externen Teilelieferstationen(20, 21, 22, 23, 24) betreffenden Soll-Bereitstellungsmengen der verschiedenen Fahrzeugteile zu den jeweiligen Soll-Bereitstellungszeitpunkten anzufordern;
d) wenigstens einen Ist-Bereitstellungsdatensatz (30, 31, 32, 33, 34) von zumindest einer externen Teilelieferstation (20, 21, 22, 23, 24) zu empfangen, wobei der Ist-Bereitstellungsdatensatz (30, 31, 32, 33, 34) zu jeweiligen Ist-Bereitstellungszeitpunkten durch die jeweiligen Teilelieferstationen (20, 21, 22, 23, 24) bereitstellbare Ist-Bereitstellungsmengen (40, 41, 42, 43, 44) der Fahrzeugteile charakterisiert;
e) eine Ist-Produktionsreihenfolge (50) in Abhängigkeit von dem wenigstens einen Ist-Bereitstellungsdatensatz (30, 31, 32, 33, 34) zu ermitteln, wenn sich der Ist-Bereitstellungsdatensatz (30, 31, 32, 33, 34) von dem Soll-Bereitstellungsdatensatz (16) unterscheidet.

9. Fahrzeugfertigungsanlage (10) mit wenigstens einer Steuervorrichtung (12) nach Anspruch 8, wobei die Fahrzeugfertigungsanlage (10) dazu ausgebildet ist, zumindest einen Teil der Kraftfahrzeuge (60, 62) in der Ist-Produktionsreihenfolge (50) nach erfolgtem Bereitstellen der Ist-Bereitstellungsmengen (40, 41, 42, 43, 44) herzustellen, wenn sich der Ist-Bereitstellungsdatensatz (30, 31, 32, 33, 34) von dem Soll-Bereitstellungsdatensatz (16) unterscheidet und wobei die Fahrzeugfertigungsanlage (10) dazu ausgebildet ist, die verschiedenen Kraftfahrzeuge (60, 62) in der Soll-Produktionsreihenfolge (14) herzustellen, wenn der Ist-Bereitstellungsdatensatz (30, 31, 32, 33, 34) mit dem Soll-Bereitstellungsdatensatz (16) übereinstimmt.
